# EUROPEAN PATENT APPLICATION

(11) **EP 3 575 002 A1**
(43) Date of publication of application: **04.12.2019**
(21) Application number: 17893984.9
(22) Date of filing: 13.12.2017
(51) Int. Cl.: B05B 5/057, B05B 5/053, B05B 15/00, G06F 9/00

(54) **ELECTROSTATIC ATOMIZATION DEVICE, INFORMATION PROCESSING TERMINAL, CONTROL METHOD, AND CONTROL PROGRAM**

(30) Priority: 30.01.2017 JP 2017014463
(71) Applicant: Sumitomo Chemical Company, Limited, Tokyo 104-8260 (JP)
(72) Inventor: DAU, Van Thanh, Takarazuka-shi, Hyogo 665-8555 (JP); ORITA, Tuyoshi, Takarazuka-shi, Hyogo 665-8555 (JP)
(74) Representative: J A Kemp LLP
(86) International application number: PCT/JP2017/044767
(87) International publication number: WO 2018/139090

(57) **Abstract**

An aspect of the present invention enables longer use of an electrostatic atomizer by employing a feature for removing foreign objects. An electrostatic atomizer (100) sprays a liquid from a tip of a first electrode of the electrostatic atomizer (100) by applying a voltage between the spray electrode (1) and a reference electrode (2) of the electrostatic atomizer (100). The electrostatic atomizer (100) includes: a selecting section (243) which selects a cleaning mode or a normal mode, the cleaning mode being for cleaning the reference electrode (2), the normal mode being for normal operation of the electrostatic atomizer (100); and a setting section (244) which sets a cleaning voltage so as to be higher than a normal spray voltage, the cleaning voltage being applied in the cleaning mode, the normal spray voltage being applied in the normal mode.

## Description

### Technical Field

The present invention relates to, for example, an electrostatic atomizer.

### Background Art

Conventionally, an atomizer which sprays a liquid in a container via a nozzle has been widely used in various fields. A known example of such an atomizer is an electrostatic atomizer which atomizes and sprays a liquid by Electro Hydrodynamics (EHD). The electrostatic atomizer forms an electric field in the vicinity of a tip of a nozzle and uses the electric field to atomize and spray the liquid at the tip of the nozzle. Patent Literature 1 is known as a document which discloses such an electrostatic atomizer.

Patent Literature 1 discloses an electrostatic atomizer having a current feedback circuit. The current feedback circuit measures the value of a current at a reference electrode. Since the electrostatic atomizer of Patent Literature 1 is charge equilibrated, measuring and referring to the value of the current makes it possible to accurately ascertain the current at the spray electrode. The electrostatic atomizer of Patent Literature 1 improves the stability of spraying by utilizing feedback control that maintains the value of the current at the spray electrode at a constant value.

### Citation List

### [Patent Literature]

[Patent Literature 1]
PCT International Application Publication No. WO 2013/018477 (Publication Date: February 7, 2013)

### Summary of Invention

### Technical Problem

When the electrostatic atomizer of Patent Literature 1 is used for a long period of time, depending on usage conditions, foreign objects (for example, airborne dust, dirt caused by the sprayed liquid, products of corrosion of the reference electrode (second electrode), and rust occurring on the reference electrode) can adhere to the reference electrode and cause a decrease in the value of the current at the reference electrode. In turn, this can cause a decrease in spraying performance of the electrostatic atomizer. However, the electrostatic atomizer of Patent Literature 1 includes no feature (mechanism) for removal of such foreign objects.

An object of the present invention lies in enabling longer use of an electrostatic atomizer by employing a feature for removing foreign objects.

### Solution to Problem

In order to solve the above problem, an electrostatic atomizer in accordance with an aspect of the present invention is an electrostatic atomizer which sprays a liquid from a tip of a first electrode of the electrostatic atomizer by applying a voltage between the first electrode and a second electrode of the electrostatic atomizer, including: a selecting section which selects a cleaning mode or a normal mode, the cleaning mode being for cleaning the second electrode, the normal mode being for normal operation of the electrostatic atomizer; and a setting section which sets a cleaning voltage so as to be higher than a normal spray voltage, the cleaning voltage being applied between the first electrode and the second electrode in the cleaning mode, the normal spray voltage being applied between the first electrode and the second electrode in the normal mode.

In order to solve the above problem, an information processing terminal in accordance with an aspect of the present invention is an information processing terminal which is communicably connectable to an electrostatic atomizer, the electrostatic atomizer having a first electrode and a second electrode and being configured to spray a liquid from a tip of the first electrode by applying a voltage between the first electrode and the second electrode, the electrostatic atomizer having a cleaning mode for cleaning the second electrode and a normal mode for normal operation of the electrostatic atomizer, the information processing terminal including: a selecting section which selects the cleaning mode or the normal mode; and a setting section which sets a cleaning voltage so as to be higher than a normal spray voltage, the cleaning voltage being applied between the first electrode and the second electrode by the electrostatic atomizer in the cleaning mode, the normal spray voltage being applied between the first electrode and the second electrode by the electrostatic atomizer in the normal mode.

In order to solve the above problem, a method of control in accordance with an aspect of the present invention is a method of controlling an electrostatic atomizer, the electrostatic atomizer having a first electrode and a second electrode and being configured to spray a liquid from a tip of the first electrode by applying a voltage between the first electrode and the second electrode, the electrostatic atomizer having a cleaning mode for cleaning the second electrode and a normal mode for normal operation of the electrostatic atomizer, the method including the steps of: selecting the cleaning mode or the normal mode; and setting a cleaning voltage so as to be higher than a normal spray voltage, the cleaning voltage being applied between the first electrode and the second electrode by the electrostatic atomizer in the cleaning mode, the normal spray voltage being applied between the first electrode and the second electrode by the electrostatic atomizer in the normal mode.

### Advantageous Effects of Invention

An electrostatic atomizer in accordance with an aspect of the present invention enables longer use of the electrostatic atomizer by employing a feature for removing foreign objects.

An information processing terminal in accordance with an aspect of the present invention and a method of control in accordance with an aspect of the present invention bring about a similar effect.

### Brief Description of Drawings

Fig. 1 is a functional block diagram illustrating a configuration of main parts of an electrostatic atomizer in accordance with Embodiment 1.
Fig. 2 is a diagram for describing an exterior appearance of the electrostatic atomizer of Fig. 1.
Fig. 3 is a diagram for describing a spray electrode and a reference electrode.
Each of (a) to (c) of Fig. 4 is a graph for describing a relation between the surrounding environment of the electrostatic atomizer of Fig. 1 and a current at the reference electrode.
Fig. 5 is a graph for describing a relationship between normal spraying and cleaning spraying.
Each of (a) to (c) of Fig. 6 is a graph for describing normal spray voltage and cleaning spray voltage.
Fig. 7 is a diagram illustrating an example flow of a process carried out by the electrostatic atomizer of Fig. 1, from commencement of operation to cleaning spraying.
Fig. 8 is a functional block diagram illustrating a configuration of main parts of an electrostatic atomizer and a smartphone in accordance with Embodiment 2.
Fig. 9 is a diagram for describing one example of operations of the electrostatic atomizer and the smartphone of Fig. 8.
Fig. 10 is a diagram illustrating an example flow of a process carried out by the electrostatic atomizer and smartphone of Fig. 8, from commencement of operation to cleaning spraying.

### Description of Embodiments

### Embodiment 1

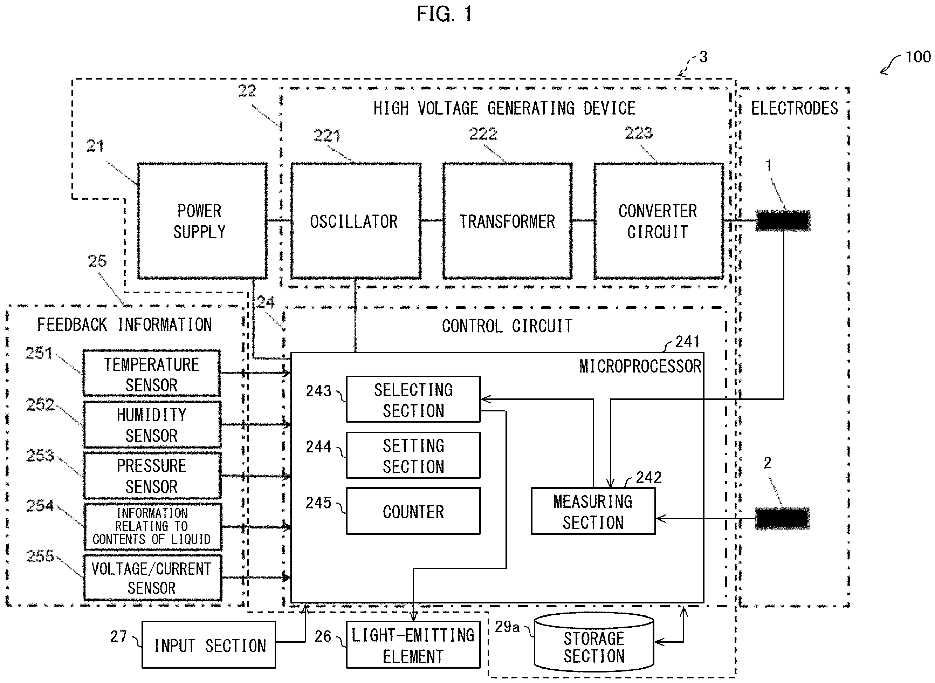

With reference to Figs. 1 to 7, the following description will discuss an electrostatic atomizer 100 in accordance with Embodiment 1. In the following description, identical members and identical constituent elements are given identical reference signs. The identical members and the identical constituent elements have identical names and identical functions. Detailed descriptions of the identical members and the identical constituent elements will not be repeated.

### [Electrostatic atomizer 100]

The electrostatic atomizer 100 is used for spraying, for example, aromatic oil, a chemical substance for an agricultural product, a medicine, an agricultural chemical, a pesticide, or an air cleaning agent. The electrostatic atomizer 100 includes a spray electrode (first electrode) 1, a reference electrode (second electrode) 2, a power supply device 3, a light-emitting element (notifying section) 26, and an input section 27.

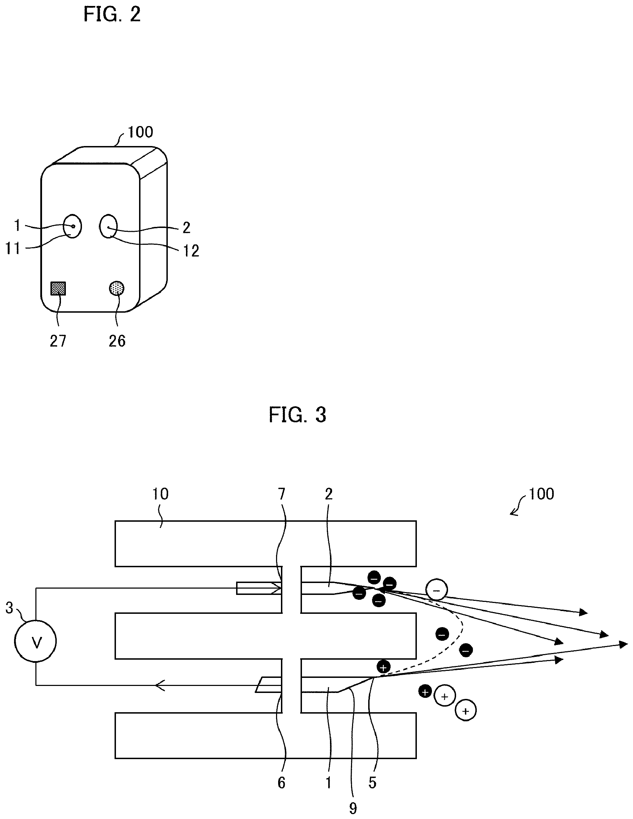

First, the following description discusses an exterior appearance of the electrostatic atomizer 100 with reference to Fig. 2. Fig. 2 is a diagram for describing the exterior appearance of the electrostatic atomizer 100.

As illustrated in Fig. 2, the electrostatic atomizer 100 has a rectangular parallelepiped shape. The spray electrode 1 and the reference electrode 2 are provided on one surface of the electrostatic atomizer 100. The spray electrode 1 is provided in the vicinity of the reference electrode 2. Further, a circular opening 11 and a circular opening 12 are provided so as to surround the spray electrode 1 and the reference electrode 2, respectively.

A voltage is applied between the spray electrode 1 and the reference electrode 2, so that an electric field is formed between the spray electrode 1 and the reference electrode 2. The spray electrode 1 sprays a positively charged droplet. The reference electrode 2 ionizes and negatively charges air in the vicinity of the reference electrode 2. Then, the negatively charged air moves away from the reference electrode 2, due to the electric field formed between the spray electrode 1 and the reference electrode 2 and a repulsive force between particles of the negatively charged air. This movement creates an air flow (hereinafter also referred to as ion wind), and the positively charged droplet is sprayed in a direction away from the electrostatic atomizer 100 due to the ion wind.

The shape of the electrostatic atomizer 100 is not limited to the rectangular parallelepiped shape but can be another shape. The shape of each of the opening 11 and the opening 12 can be a shape other than a circular shape. The opening 11 and the opening 12 can each have an opening size which is adjusted as appropriate.

As illustrated in Fig. 2, the light-emitting element 26 may be provided to a surface of a housing of the electrostatic atomizer 100. As one example, the light-emitting element 26 may be a multicolor light emitting diode (LED) which selectively emits light having one of a predetermined plurality of colors. An example of how the light-emitting element 26 operates will be described later.

The input section 27 is a member for receiving an input operation from the user (hereinafter, "user operation"). The input section 27 may be, for example, a push button. The input section 27 may be provided to a surface of the housing of the electrostatic atomizer 100. An example of how the electrostatic atomizer 100 operates in response to a user operation will be described later.

### [Spray electrode 1, reference electrode 2]

The spray electrode 1 and the reference electrode 2 will be described below with reference to Fig. 3. Fig. 3 is a diagram for describing the spray electrode 1 and the reference electrode 2.

The spray electrode 1 includes a conductive conduit such as a metallic capillary (e.g., type 304 stainless steel), and a tip portion 5 which is a tip portion of the spray electrode 1. The spray electrode 1 is electrically connected with the reference electrode 2 via the power supply device 3. The spray electrode 1 sprays a substance to be atomized (hereinafter referred to as "liquid") from the tip portion 5. The spray electrode 1 has an inclined plane 9, which inclines with respect to an axial center of the spray electrode 1 and has a shape that becomes thinner and sharper toward the tip portion 5 of the spray electrode 1.

The reference electrode 2 includes a conductive rod such as a metal pin (e.g., type 304 steel pin). The spray electrode 1 and the reference electrode 2 are provided parallel so as to be spaced apart from each other with a certain distance therebetween. The spray electrode 1 and the reference electrode 2 are provided so as to be spaced apart from each other by a distance of, for example, 8 mm.

The power supply device 3 is provided for applying a high voltage between the spray electrode 1 and the reference electrode 2. For example, the power supply device 3 applies a high voltage of 1 kV to 30 kV (e.g., 3 kV to 7 kV) between the spray electrode 1 and the reference electrode 2. The application of the high voltage forms an electric field between the electrodes. This causes an electric dipole inside a dielectric 10. At this point in time, the spray electrode 1 is positively charged, and the reference electrode 2 is negatively charged (alternatively, the spray electrode 1 can be negatively charged, and the reference electrode 2 can be positively charged). Then, a negative dipole occurs on a surface of the dielectric 10 which surface is the closest to the spray electrode 1 that is positively charged, and a positive dipole occurs on a surface of the dielectric 10 which surface is the closest to the reference electrode 2 that is negatively-charged, so that a charged gas and a charged substance species are released by the spray electrode 1 and the reference electrode 2. As described above, an electric charge generated by the reference electrode 2 has a polarity opposite that of the liquid. Therefore, the electric charge of the liquid is equilibrated by an electric charge generated at the reference electrode 2. This allows the electrostatic atomizer 100 to stably carry out spraying, based on the principle of charge equilibration.

In this way, the electrostatic atomizer 100 is configured to be able to spray the liquid from the end (tip portion 5) of the spray electrode 1 by applying a voltage between the spray electrode 1 and the reference electrode 2.

The dielectric 10 is made of a dielectric material such as nylon 6, nylon 11, nylon 12, polypropylene, nylon 66, or a polyacetyl-polytetrafluoroethylene mixture. The dielectric 10 supports the spray electrode 1 at a spray electrode mounting section 6 and also supports the reference electrode 2 at a reference electrode mounting section 7.

### [Power supply device 3]

The following description will discuss the power supply device 3 with reference to Fig. 1. Fig. 1 is a functional block diagram illustrating a configuration of main parts of the electrostatic atomizer 100.

The power supply device 3 includes a power supply 21, a high voltage generating device 22, a control circuit (control section) 24, and a storage section 29a.

The power supply 21 supplies power necessary for operating the electrostatic atomizer 100. The power supply 21 may be a well-known power supply and may include a main power supply or one or more batteries. The power supply 21 is preferably a low voltage power supply and a direct current (DC) power supply. For example, the power supply 21 may include a dry battery or a combination of a plurality of dry batteries. The number of batteries is determined by a required voltage level and a power consumption of the power supply. The power supply 21 supplies direct-current power (in other words, a direct current and a direct-current voltage) to an oscillator 221 of the high voltage generating device 22.

The high voltage generating device 22 includes the oscillator 221, a transformer 222, and a converter circuit 223. The oscillator 221 converts direct-current power (in other words, a direct current and a direct-current voltage) into alternating-current power (in other words, an alternating current and an alternating-current voltage). The transformer 222 is connected to the oscillator 221. The transformer 222 changes the level of voltage of the alternating current (or the size of the alternating current). The converter circuit 223 is connected to the transformer 222. The converter circuit 223 generates a desired voltage and converts alternating-current power (in other words, alternating current and alternating-current voltage) into direct-current power (in other words, direct current and direct-current voltage). The converter circuit 223 typically includes a charge pump and a rectifier circuit. A typical converter circuit is a Cockcroft-Walton circuit.

The control circuit 24 comprehensively controls various sections of the electrostatic atomizer 100. Functions of the control circuit 24 may be realized via a central processing unit (CPU) executing a program stored by the storage section 29a. The storage section 29a stores various programs executed by the control circuit 24 and data used by these programs.

The control circuit 24 supplies to the oscillator 221 a pulse width modulation (PWM) signal have a certain set value. PWM is a method of controlling current and voltage by changing the time of output (i.e., changing the pulse width) of a pulse signal. A pulse signal is an electrical signal in which ON and OFF periods are repeated. One example of a pulse signal is a rectangular wave. For a rectangular wave, pulse width (which is the length of time voltage is outputted) is expressed along a horizontal axis.

PWM utilizes a timer that operates on a certain period. Pulse width is controlled by setting, for the timer, positions at which the pulse signal is ON. The ratio of ON time during the certain period is referred to as a "duty cycle" (also known as a "duty ratio").

For various practical applications the control circuit 24 includes a microprocessor 241. The microprocessor 241 may be designed so that the duty cycle of the PWM signal can be further adjusted in accordance with feedback information (operating environment information) 25.

Examples of the feedback information 25 include environmental conditions (air temperature, humidity, and/or atmospheric pressure), a liquid amount, and an optional user setting. The information is provided in the form of analog information or digital information, and processed by the microprocessor 241. The microprocessor 241 may be designed so as to be able to make compensations for improving spray quality and spray stability, by altering in accordance with the inputted information a spray period, an on time of spray, or the applied voltage.

As an example, the feedback information 25 may be obtained by a temperature detecting element, such as a thermistor, which is used for temperature compensation. In such a case, the microprocessor 241 alters the spray period in accordance with a change in temperature detected by the temperature detecting element. One cycle of the spray period is constituted by a length of time during which the electrostatic atomizer 100 sprays the liquid and a length of time during which the spraying is stopped. For example, in the case of a periodical spray period in which the spraying is carried out for 35 seconds (an ON state, during which the power supply applies a high voltage between the first and second electrodes) and then spraying is stopped for 145 seconds (an OFF state, during which the power supply does not apply a high voltage between the first and second electrodes), the spray period is 35 seconds + 145 seconds = 180 seconds.

The spray period can be altered by software included in the microprocessor 241 in the power supply device, and may be controlled such that the spray period is increased from a set point as temperature increases and the spray period is decreased from the set point as temperature decreases. Preferably, the spray period is increased or decreased in accordance with a prescribed index determined by properties of the liquid to be sprayed. For convenience, a compensatory variation of the spray period can be limited such that the spray period varies only between 0°C to 60°C (e.g., 10°C to 45°C). Such a configuration assumes that extreme temperatures registered by the temperature detecting element are errors and ignores such extreme temperatures, whilst still providing a spray period which, while not optimized, is acceptable for low and high temperature conditions.

As illustrated in Fig. 1, examples of the feedback information 25 include measurement results from a temperature sensor 251, measurement results from a humidity sensor 252, measurement results from a pressure sensor 253, information 254 relating to contents of the liquid (for example, information indicating a remaining amount of liquid as measured by a level meter), and measurement results from a voltage/current sensor 255. The information 254 relating to contents of the liquid may include information indicating the viscosity of the liquid (for example, information indicating measurement results from a viscosity sensor (not illustrated) which measures the viscosity of the liquid).

Note that the term "operating environment information" is used to refer to information that indicates at least one of (i) the surrounding environment of the electrostatic atomizer 100 and (ii) an operation status of the power supply 21 which supplies power to the electrostatic atomizer 100. The feedback information 25 may be used as the operating environment information.

Information that indicates the surrounding environment of the electrostatic atomizer 100 is referred to here as "surrounding environment information". Information that indicates an operation status of the power supply 21 which supplies power to the electrostatic atomizer 100 is referred to here as "power supply operation information". Embodiment 1 involves an example case in which the operating environment information includes both the surrounding environment information and the power supply operation information.

The surrounding environment information may include information relating to at least one of the air temperature (temperature) of an area surrounding the electrostatic atomizer 100, the humidity of the area surrounding the electrostatic atomizer 100, and the atmospheric pressure of the area surrounding the electrostatic atomizer 100. Embodiment 1 involves an example in which the surrounding environment information includes (i) information indicating the air temperature of the area surrounding the electrostatic atomizer 100 (temperature information) and (ii) information indicating the humidity of the area surrounding the electrostatic atomizer 100 (humidity information).

The power supply operation information may include information indicating at least one of the level of voltage supplied from the power supply 21 to the high voltage generating device 22 and the size of the current supplied from the power supply 21 to the high voltage generating device 22. Embodiment 1 involves an example in which the power supply operation information includes information (battery voltage information) indicating the level of voltage (battery voltage) supplied from the power supply 21 to the electrostatic atomizer 100 (more specifically, to the high voltage generating device 22). The battery voltage may be measured by the voltage/current sensor 255.

Typically, the control circuit 24 is an output port of the microprocessor 241 and supplies an PWM signal to the oscillator 221. The spray duty cycle and spray period may be controlled via the same PWM output port. During a period where the electrostatic atomizer 100 sprays the liquid, the PWM signal is supplied to the oscillator 221.

The control circuit 24 may be configured so as to be able to control an output voltage of the high voltage generating device 22 by controlling an amplitude of oscillation of an alternating current in the oscillator 221, a frequency of the alternating current, or a duty cycle (on/off time of a voltage) in the oscillator 221 (or combinations thereof).

### [Microprocessor 241]

As illustrated in Fig. 1, the microprocessor 241 includes a measuring section 242, a selecting section 243, a setting section 244, and a counter 245. The following description will discuss the various sections of the microprocessor 241.

The measuring section 242 measures a current at the spray electrode 1 or a current at the reference electrode 2 (hereinafter, "current I"). Embodiment 1 involves an example in which the measuring section 242 measures the current I (the current at the reference electrode 2). The measuring section 242 may include a discretionarily selected current measuring device (for example, a current transformer).

The measuring section 242 may also measure a voltage which the power supply device 3 applies between the spray electrode 1 and the reference electrode 2 (hereinafter, "voltage E"). The measuring section 242 may include a discretionarily selected voltage measuring device (for example, a transformer).

For convenience of explanation, Embodiment 1 involves an example configuration in which the measuring section 242 is provided inside the microprocessor 241. Note, however, that the measuring section 242 may be provided outside the microprocessor 241.

The selecting section 243 selects a mode of the electrostatic atomizer 100. Specifically, the selecting section 243 selects either a cleaning mode or a normal mode. The cleaning mode is a mode for cleaning the reference electrode 2. The cleaning mode will be described in detail later. The normal mode is a mode for normal operation of the electrostatic atomizer 100 (a mode for carrying out conventional electrostatic spraying).

During one spray (one cycle of a spray period) by the electrostatic atomizer 100, one pulse of the voltage E is applied between the spray electrode 1 and the reference electrode 2. The setting section 244 sets (alters) the voltage E.

Specifically, the setting section 244 sets the waveform of the voltage E (voltage pulse) in accordance with the cleaning mode or the normal mode. As one example, the setting section 244 may adjust the waveform of the voltage E by adjusting the duty cycle of the PWM signal.

The setting section 244 alters the peak value (level) of the voltage E which the power supply device 3 applies between the spray electrode 1 and the reference electrode 2, in accordance with whether the mode is the normal mode or the cleaning mode. More specifically, the setting section 244 sets the peak value of the voltage E so as to be higher in the cleaning mode than in the normal mode. As described later, the setting section 244 may alter the pulse width of the voltage E in accordance with whether the mode is the cleaning mode or the normal mode.

For convenience of explanation, the voltage E in the normal mode is referred to as a voltage E1 (normal spray voltage), and the voltage E in the cleaning mode is referred to as a voltage E2 (cleaning voltage). The setting section 244 switches the voltage E to the voltage E1 or to the voltage E2 in accordance with the mode selected by the selecting section 243.

Spraying carried out by the electrostatic atomizer 100 in the cleaning mode is referred to as "cleaning spraying", and spraying carried out by the electrostatic atomizer 100 in the normal mode is referred to as "normal spraying".

Note that the voltage E1 (normal spray voltage) is set in advance by the manufacturer of the electrostatic atomizer 100 such that when the electrostatic atomizer 100 carries out normal spraying in the normal mode, a Taylor cone is stably formed at the tip of the spray electrode 1. As one example, the voltage E1 may be set to fall in a range of 3 kV to 7 kV, as described above.

The counter 245 counts a number of sprays carried out by the electrostatic atomizer 100 (i.e., a number of times the electrostatic atomizer 100 sprays the liquid). The counter 245 may be a publicly known event counter. As one example, the counter 245 may be configured to detect the number of pulses of the current I (or voltage E) measured by the measuring section 242, and count the number of pulses as the number of sprays. Hereinafter, the number of sprays counted by the counter 245 will be represented by the letter N.

The counter 245 may count spray time of the electrostatic atomizer 100 (the length of time during which the electrostatic atomizer 100 sprays the liquid). For example, the counter 245 can count the spray time as being a product obtained by multiplying (i) the number of pulses of the current I by (ii) the length of one cycle of the spray period, which has been set in advance. The counter 245 need only be able to count either the number of sprays or the spray time. Alternatively, the counter 245 may count both the number of sprays and the spray time.

The counter 245 may provide, to the selecting section 243, information indicating a counted amount. The counted amount is the value indicating the result of counting by the counter 245. In Embodiment 1, the above-described number of sprays N is one example of the counted amount. As described later, the selecting section 243 may select the mode of the electrostatic atomizer 100 in accordance with the number of sprays N. The selecting section 243 can alternatively select the mode of the electrostatic atomizer 100 in accordance with the current I.

The selecting section 243 can be controlled to select the mode by having a user carry out a predetermined input operation on the input section 27. For example, the input section 27 may control the selecting section 243 to select the cleaning mode in a case where the input section 27 receives the input operation (for example, pressing of a button). In other words, the selecting section 243 may select the cleaning mode in accordance with the input operation. Providing the input section 27 makes it possible for the user to discretionarily change the mode of the electrostatic atomizer 100.

The electrostatic atomizer 100 may further include a notification indication section which provides external notification of the mode of the electrostatic atomizer 100. For convenience of explanation, Embodiment 1 involves an example in which the selecting section 243 also serves as the notification indication section. Note, however, that the notification indication section and the selecting section 243 may be separate functional sections.

The selecting section 243 may control the light-emitting element 26 in accordance with the mode selected by the selecting section 243. As one example, the selecting section 243 may control the light-emitting element 26 to be in an OFF state (a non-emitting state) in a case where the mode is the normal mode (in a case where the electrostatic atomizer 100 is in the normal mode).

The selecting section 243 may control the light-emitting element 26 to emit light of a predetermined color (for example, red light) in a case where the mode is the cleaning mode (in a case where the electrostatic atomizer 100 is in the cleaning mode). The state of emission from the light-emitting element 26 provides notification, to outside the electrostatic atomizer 100, of whether the mode is the normal mode or the cleaning mode.

In this way, the light-emitting element 26 serves as a notifying section which provides notification of the mode of the electrostatic atomizer 100. In particular, in a case where the notifying section is embodied by the light-emitting element 26, the light-emitting element 26 uses light to provide visual notification to the user.

Note, however, that the method of providing notification of the mode (the manner of notification) is not limited to a method which uses light. For example, the electrostatic atomizer 100 may include a speaker (audio output section) which serves as the notifying section. The selecting section 243 may control the speaker to output predetermined audio (for example, an alarm sound) in a case where the mode is the cleaning mode. In this way, the notifying section may use audio to provide auditory notification to the user.

The electrostatic atomizer 100 may include a vibrator (vibrating section) which serves as the notifying section. The selecting section 243 may control the vibrator to vibrate in a case where the mode is the cleaning mode.

The electrostatic atomizer 100 may include a display section (for example, the touch panel 28, described later) which serves as the notifying section. The display section may use a text message to provide notification that the mode is the cleaning mode.

Furthermore, a combination of any of the above manners of notification (light, audio, vibration, text message) may be employed. The manner of notification need only include at least one of audio, light, vibration, and a text message.

### [Relation between surrounding environment and current I]

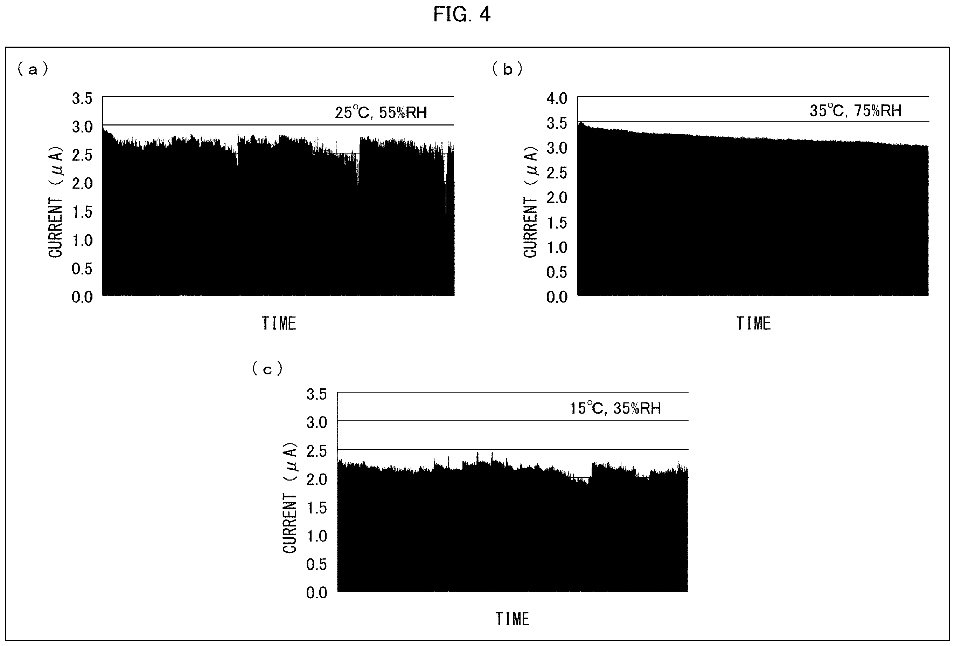

Each of (a) to (c) of Fig. 4 is a graph for describing a relation between the surrounding environment of the electrostatic atomizer 100 and the current I. Specifically, each of (a) to (c) of Fig. 4 is a graph indicating results of measuring the current I in respective cases where the electrostatic atomizer 100 carried out spraying in differing surrounding environments (differing air temperature and humidity). In each of the graphs, the vertical axis represents the current I (unit: µA), and the horizontal axis represents time (arbitrary unit).

(a) of Fig. 4 indicates results of measuring the current I in a case where air temperature was 25°C and relative humidity (RH) was 55%. In (b) of Fig. 4, air temperature was 35°C, and relative humidity was 75%. In (c) of Fig. 4, air temperature was 15°C, and relative humidity was 35%.

As can be seen in (a) to (c) of Fig. 4, it was confirmed that during operation of the electrostatic atomizer 100, the current I tended to decrease as operation time increased. A main reason for this decrease in the current I is as follows.

As operation time of the electrostatic atomizer 100 increases, depending on usage conditions, foreign objects (for example, airborne dust, dirt caused by the sprayed liquid, products of corrosion of the reference electrode 2, and rust occurring on the reference electrode 2) gradually adhere to the reference electrode 2. As the amount of adhered foreign objects increases, there is an increase in resistance between the spray electrode 1 and the reference electrode 2 during spraying. As a result, the current I decreases.

In a case where the current I is markedly decreased as compared to the current I during a normal state of operation, the electrostatic atomizer 100 suffers a decrease in spraying performance and becomes unable to carry out suitable spraying. As such, once the current I has decreased to a certain degree, it is preferable to clean the reference electrode 2 in order to remove foreign objects which have adhered to the reference electrode 2. This is because removing foreign objects which have adhered to the reference electrode 2 makes it possible to ameliorate the decrease in spraying performance of the electrostatic atomizer 100.

In view of this fact, the inventors of the present invention (hereinafter, simply "the inventors") arrived at a configuration involving a novel mode, i.e., the cleaning mode, in which electrostatic atomizer 100 carries out specific manner of spraying (cleaning spraying) which differs from normal spraying. According to the configuration arrived at by the inventors, the cleaning spraying cleans the reference electrode 2, and thus it is possible to use the electrostatic atomizer 100 for a longer period of time.

Note here that in a typical natural environment, an increase in air temperature correlates to an increase in humidity. When humidity is high, moisture in the air affects the electric charge of the area surrounding the spray electrode 1. As a result, a leak current is more likely to occur between the spray electrode 1 and the reference electrode 2. In a case where the leak current occurs, resistance of the spray electrode 1 decreases. This decrease in resistance makes it more difficult to form, between the spray electrode 1 and the reference electrode 2, an electric field suitable for electrostatic spraying. This decreases the spraying performance of the electrostatic atomizer 100.

As such, in the case of a high air temperature, the current I flowing through the reference electrode 2 presumably tends to be increased as compared to when the air temperature is low. (b) of Fig. 4 indicates results of measuring the current I in a case where both air temperature and humidity are higher than in (a) of Fig. 4. The graph of (b) of Fig. 4 serves to illustrate the tendency of the current I to increase.

Conversely, in the case of a low air temperature, the current I flowing through the reference electrode 2 tends to be decreased as compared to when the air temperature is high. (c) of Fig. 4 indicates results of measuring the current I in a case where both air temperature and humidity are lower than in (a) of Fig. 4. The graph of (c) of Fig. 4 serves to illustrate the tendency of the current I to decrease.

The setting section 244 may set (alter) the voltage E2 in accordance with the surrounding environment information (in other words, in accordance with the surrounding environment of the electrostatic atomizer 100). As one example, assume a case where at an air temperature of 25°C, the voltage E2 is set to 6.4 kV.

In a case where the air temperature increases from 25°C to a temperature of 35°C, the setting section 244 may increase the voltage E2 from 6.4 kV to a voltage of 6.8 kV. In a case where the air temperature decreases from 25°C to a temperature of 15°C, the setting section 244 may decrease the voltage E2 from 6.4 kV to a voltage of 6.0 kV.

In this way, the setting section 244 may (i) increase the voltage E2 in response to an increase in air temperature and (ii) decrease the voltage E2 in response to a decrease in air temperature. Such a configuration makes it possible to carry out cleaning spraying in accordance with the surrounding environment.

The manufacturer of the electrostatic atomizer 100 may configure the storage section 29a to store, in advance, a predetermined table or conversion formula indicating an association between the air temperature and the voltage E2. The setting section 244 may use the table or conversion formula to set the voltage E2 in accordance with the air temperature.

The setting section 244 may set the voltage E2 in a manner similar to that described above, except with use of the humidity (humidity information) instead of the air temperature (air temperature information). Alternatively, the setting section 244 may set the voltage E2 with use of both the air temperature and the humidity.

The surrounding environment information may include information indicating an atmospheric pressure of the area surrounding the electrostatic atomizer 100 (atmospheric pressure information). In such a case, the setting section 244 may set the voltage E2 with use of the atmospheric pressure information.

### [Cleaning spraying]

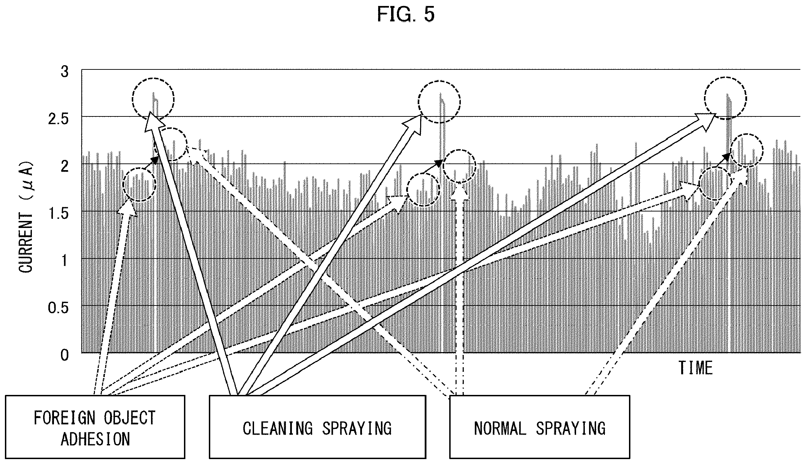

Fig. 5 is a graph for describing a relationship between the normal spraying and the cleaning spraying. Specifically, Fig. 5 is a graph indicating results of measurement of the current I a case where the electrostatic atomizer 100 was controlled to operate in the cleaning mode each time a predetermined number of sprays had been carried out. In each of the graphs, the vertical axis represents the current I (unit: µA), and the horizontal axis represents time (arbitrary unit).

In Fig. 5, the descriptive label "foreign object adhesion" indicates the current I as observed in a case where the electrostatic atomizer 100 is in the normal mode and a foreign object is presumably adhered to the reference electrode 2. It was confirmed that adhesion of foreign objects to the reference electrode 2 causes a decrease in the current I as described above.

As can be seen from Fig. 5, in a case where the electrostatic atomizer 100 is caused to operate in the normal mode for a long period of time after a foreign object has adhered to the reference electrode 2, it is difficult to maintain the spraying performance of the electrostatic atomizer 100. This is because as operation time of the electrostatic atomizer 100 increases, the current I will presumably decrease further.

In Fig. 5, the descriptive label "cleaning spraying" indicates the current I as observed in a case where the electrostatic atomizer 100 is caused to operate in the cleaning mode after the "foreign object adhesion". As illustrated in Fig. 5, in a case where the electrostatic atomizer 100 is caused to carry out cleaning spraying, the current I increases as compared to the normal spraying. The current I increases because the voltage E2 (cleaning voltage) set by the setting section 244 is greater than the voltage E1 (normal spray voltage).

In Fig. 5, the descriptive label "normal spraying" indicates the current I as observed in a case where the electrostatic atomizer 100 is caused to operate in the normal mode again after the "cleaning spraying". As illustrated in Fig. 5, the current I measured after the cleaning spraying is greater than the current I measured during the "foreign object adhesion". In other words, it was confirmed that the cleaning spraying restored the current I to a normal value (a value at which spraying can be carried out suitably).

This restoration of the current I is presumably caused by removal, via the cleaning spraying, of foreign objects adhered to the reference electrode 2. In this way, the inventors confirmed that the cleaning spraying makes it possible to restore the spraying performance of the electrostatic atomizer 100.

### [Mechanism of cleaning spraying]

The inventors' inferences regarding the mechanism of the cleaning spraying are as follows. Applying the voltage E2 (cleaning voltage), which is greater than the voltage E1 (normal spray voltage), between the spray electrode 1 and the reference electrode 2 increases the strength of the electric field formed between the spray electrode 1 and the reference electrode 2. Along with the increase of strength of the electric field, there is an increase in the flow velocity of the ion wind generated in the vicinity of the spray electrode 1 and the reference electrode 2.

As a result, the ion wind having the increased flow velocity makes it possible to remove (blow off) the foreign objects adhering to the reference electrode 2. It is expected that the ion wind similarly makes it possible to remove foreign objects adhering to the spray electrode 1.

Thus, the cleaning mode is a mode in which an electric field greater than that of the normal mode is generated in order to generate ion wind having a higher flow velocity than that of the normal mode (i.e., ion wind for removing foreign objects adhering to the reference electrode 2). In other words, the cleaning mode is a mode in which, instead of the voltage E1, the voltage E2 is applied between the spray electrode 1 and the reference electrode 2, in order to generate an ion wind having a higher flow velocity.

### [Example of voltage waveform]

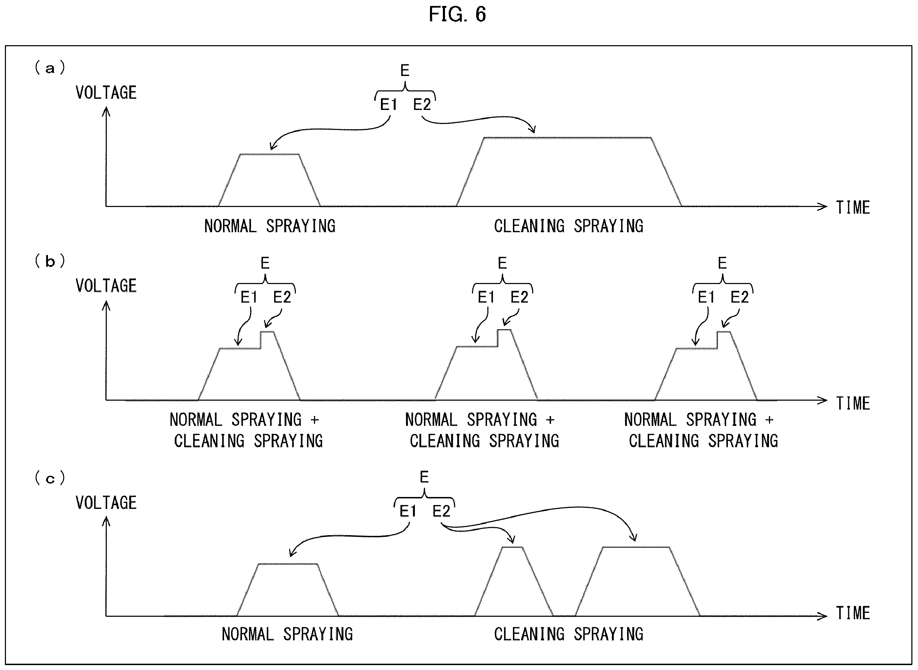

Discussed next are specific examples of the voltage E1 (normal spray voltage) and the voltage E2 (cleaning voltage). Each of (a) to (c) of Fig. 6 is a graph for describing the voltage E1 and the voltage E2.

Specifically, each of (a) to (c) of Fig. 6 is a graph illustrating a waveform of the voltage E (more specifically, of the voltage E1 and the voltage E2). In each of the graphs, the vertical axis represents voltage (arbitrary unit), and the horizontal axis represents time (arbitrary unit).

First, reference is made to (a) of Fig. 6. A cleaning mode which utilizes the voltage E indicated in (a) of Fig. 6 is referred to as a "first method". In the first method, a pulse of the voltage E2 commences rising at a point in time after a pulse of the voltage E1 finishes falling. In other words, in the first method, the setting section 244 controls the power supply device 3 to apply the voltage E1 and the voltage E2 such that application of the voltage E1 and application of the voltage E2 are discontinuous from each other.

In the first method, a normal spraying time period (time period during which normal spraying is carried out) and a cleaning spraying time period (time period during which cleaning spraying is carried out) are set in a discontinuous manner. In other words, in the first method, a no-spray time period (time period during which neither normal spraying nor cleaning spraying is carried out) is provided between the normal spraying time period and the cleaning spraying time period.

As one example, in the first method, the voltage E1 is 6.0 kV and the voltage E2 is 6.4 kV. The normal spraying time period is 7 seconds, and the cleaning spraying time period is 120 seconds.

In the example of (a) of Fig. 6, the cleaning spraying time period is set so as to be longer than the normal spraying time period. In other words, the setting section 244 sets a pulse width of the voltage E2 to be greater than a pulse width of the voltage E1. With this configuration, a single cleaning spraying time period is set so as to be comparatively longer. As such, the ion wind can be maintained over a longer length of time, and therefore foreign objects can be suitably removed from the reference electrode 2.

Note, however, that the length of the cleaning spraying time period is not particularly limited, provided that the length allows for removal of a foreign object from the reference electrode 2. For example, the cleaning spraying time period may be set so as to be equivalent in length to the normal spraying time period.

Note that in a case where the cleaning spraying time period is longer than the normal spraying time period, the amount of liquid sprayed during one cleaning spraying is greater than that of normal spraying. Furthermore, in the cleaning spraying, the voltage E2 (cleaning voltage) which is larger than the voltage E1 (normal spray voltage) is applied. As such, in a case where the cleaning spraying time period is longer than the normal spraying time period, the power consumed (power consumption) by the electrostatic atomizer 100 during one cleaning spraying is greater than that of normal spraying.

In view of this, the cleaning spraying time period may be set so as to be shorter than the normal spraying time period. In other words, the setting section 244 may set the pulse width of the voltage E2 to be less than the pulse width of the voltage E1. With such a configuration, the amount of liquid sprayed in one cleaning spraying is decreased. As such, it is possible to decrease the amount of liquid sprayed as compared to a configuration in which the cleaning spraying time period is longer.

Typically, the liquid is stored in advance in a bottle (not illustrated) provided inside the electrostatic atomizer 100. The above configuration makes it possible to increase a length of time between (i) a point at which operation of the electrostatic atomizer 100 commences and (ii) a point at which a predetermined amount of the liquid stored in the bottle is used up by spraying. It is therefore possible to increase a length of time between (i) a point at which operation of the electrostatic atomizer 100 commences and (ii) a point at which the bottle becomes empty and must be refilled with the liquid (or a point at which the bottle itself is replaced with another bottle that has been filled with the liquid).

In this way, it is possible to lengthen a maintenance period of the electrostatic atomizer 100 and therefore improve convenience for the user. Furthermore, shortening the cleaning spraying time period makes it possible to reduce power consumed by the electrostatic atomizer 100.

For the sake of simplicity, (a) of Fig. 6 illustrates an example in which one normal spraying time period is followed by one cleaning spraying time period. Note however, that one cleaning spraying time period may follow a plurality of normal spraying time periods. Such a configuration also makes it possible to decrease the amount of liquid sprayed and the amount of power consumed by the electrostatic atomizer 100. The same applies to the examples of (b) and (c) of Fig. 6 discussed below.

The setting section 244 may set a rise time of a pulse of the voltage E2. As one example, the setting section 244 may alter the rise time of a pulse of the voltage E2 by gradually altering the duty cycle of the PWM signal.

The rise time of a pulse of the voltage E2 is not particularly limited. However, the inventors presumed that shortening the rise time of a pulse of the voltage E2 would make it possible for the cleaning spraying to effectively remove foreign objects. The inventors' inferences regarding this mechanism of are as follows.

Setting pulses of the voltage E2 to rise rapidly increases the amount of change in the electric field per unit time. As a result, due to the increase in the amount of change in the electric field per unit time, presumably it is possible to generate ion wind having an even greater flow velocity. In addition, due to the large change in the electric field per unit time, the amount of change in the flow velocity of the ion wind per unit time also increases. A large change in the flow velocity per unit time is also presumably effective for removal of foreign objects.

Next, reference is made to (b) of Fig. 6. A cleaning mode which utilizes the voltage E indicated in (b) of Fig. 6 is referred to as a "second method". In the second method, a pulse of the voltage E2 commences rising at a point in time before a pulse of the voltage E1 commences falling. In other words, in the second method, the setting section 244 controls the power supply device 3 to apply the voltage E1 and the voltage E2 such that application of the voltage E1 and application of the voltage E2 are continuous with each other.

In the second method, the normal spraying time period and the cleaning spraying time period are set in a continuous manner. In other words, in the second method, a no-spray time period is not provided between the normal spraying time period and the cleaning spraying time period. In this way, the second method differs from the first method.

As one example, in the second method, the voltage E1 is 6.0 kV and the voltage E2 is 6.4 kV. The normal spraying time period is 5 seconds, and the cleaning spraying time period is 2 seconds.

In the second method, it is preferable to provide one cleaning spraying time period for each normal spraying time period, from the viewpoint of effectively removing foreign objects via cleaning spraying. In other words, it is preferable to carry out one cleaning spraying immediately after one normal spraying is carried out. With such a configuration, not only is it possible to remove foreign objects adhering to the reference electrode 2, but it is also possible to reduce the likelihood of a foreign object adhering to the reference electrode 2.

Next, reference is made to (c) of Fig. 6. A cleaning mode which utilizes the voltage E indicated in (c) of Fig. 6 is referred to as a "third method". The third method is a variation of the first method. The third method differs from the first method in that, in the third method, the cleaning spraying time period is divided into a plurality of time periods.

As illustrated in (c) of Fig. 6, in the third method, a first cleaning spraying is carried out via a pulse of the voltage E2 having a comparatively smaller pulse width. Then, after the first cleaning spraying has finished, a second cleaning spraying is carried out via a pulse of the voltage E2 having a comparatively greater pulse width. In this way, in the example of (c) of Fig. 6, the cleaning time period is divided into two time periods. In the third method, a sum of a first cleaning spraying time period and a second cleaning spraying time period is considered to be a single cleaning spraying time period.

As one example, in the third method, the voltage E1 is 6.0 kV and the voltage E2 is 6.4 kV. The normal spraying time period is 5 seconds, the first cleaning spraying time period is 30 seconds, and the second cleaning spraying time period is 60 seconds.

The third method makes it possible to carry out a plurality of cleaning sprayings which are short in length of time. As such, the third method as well generates an ion wind having a large flow velocity and achieves effective cleaning spraying.

### [Flow of process carried out by electrostatic atomizer 100 from commencement of operation to cleaning spraying]

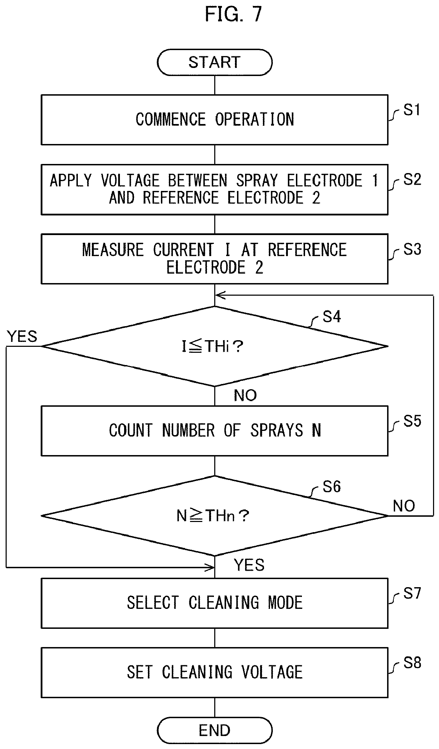

Fig. 7 is a flowchart illustrating an example flow of a process carried out by the electrostatic atomizer 100, from commencement of operation to cleaning spraying. The following description will discuss the flow of this process.

First, once the electrostatic atomizer 100 is powered on, operation of the electrostatic atomizer 100 commences (S1). The power supply device 3 applies the voltage E1 (normal spray voltage) between the spray electrode 1 and the reference electrode 2 (S2), so that the electrostatic atomizer 100 commences spraying (normal spraying) in the normal mode.

The measuring section 242 then measures the current I (current at the reference electrode 2) (S3). Thereafter, the selecting section 243 compares the current I to a predetermined threshold value THi (S4). Hereinafter, the threshold value THi may also be referred to as a first threshold value (or a current threshold value). The first threshold value THi may be set in advance in the electrostatic atomizer 100. The first threshold value THi is a threshold value for the current I.

As one example, the first threshold value THi may be set to 2.0 µA. The selecting section 243 may have an additional function of setting (altering) the first threshold value THi in accordance with the surrounding environment information.

In a case where the current I is less than or equal to the first threshold value THi (in a case where Im ≤ THi) ("YES" in S4), the selecting section 243 may select the cleaning mode as the mode of the electrostatic atomizer 100 (S7, selection step). Such a configuration makes it possible to cause the electrostatic atomizer 100 to operate in the cleaning mode in a case where there is a presumably high likelihood that a foreign object is adhered (in a case where the current I is less than or equal to the first threshold value THi).

In a case where the current I is greater than the first threshold value THi (in a case where Im > THi) ("NO" in S4), the selecting section 243 may maintain the normal mode as the mode of the electrostatic atomizer 100. The process then proceeds to S5.

The counter 245 then counts the number of sprays N (S5). Thereafter, the selecting section 243 compares the number of sprays N to a predetermined threshold value THn (S6). Hereinafter, the threshold value THn may also be referred to as a second threshold value (or a count threshold value). The second threshold value THn may be set in advance in the electrostatic atomizer 100. The second threshold value THn is a threshold value for the counted amount.

As one example, the second threshold value THn may be set to 100. The selecting section 243 may have an additional function of setting the second threshold value THn in accordance with the surrounding environment information.

In a case where the counted number N is greater than or equal to the second threshold value THn (in a case where N ≥ THn) ("YES" in S6), the selecting section 243 may select the cleaning mode as the mode of the electrostatic atomizer 100 (S7). Such a configuration makes it possible to cause the electrostatic atomizer 100 to operate in the cleaning mode in a case where there is a presumably high likelihood that a foreign object is adhered (in a case where the counted number N is greater than or equal to the second threshold value THn).

The counter 245 preferably resets the counted number N in a case where the selecting section 243 has selected the cleaning mode in S7. In other words, the counter 245 preferably resets the counted number N to N = 0 in a case where the selecting section 243 has selected the cleaning mode in S7. Such a configuration makes it possible to cause the electrostatic atomizer 100 to carry out cleaning spraying each time a predetermined number of sprays (second threshold value THn) have been carried out. The same applies in a case where, instead of the counted number N, spray time is used as the counted amount.

After the selecting section 243 has selected the cleaning mode in S7, the setting section 244 sets the voltage to the voltage E2 (cleaning voltage), which is higher than the voltage E1 (normal spray voltage) (S8, setting step). As a result, the electrostatic atomizer 100 commences operation in the cleaning mode.

Note that in a case where the counted number N is less than the second threshold value THn (in a case where N < THn) ("NO" in S6), the process returns to S4.

### [Effects of electrostatic atomizer 100]

As described above, the electrostatic atomizer 100 includes (i) the selecting section 243 which selects the cleaning voltage or the normal mode and (ii) the setting section 244 which sets the voltage E2 (cleaning voltage) used during the cleaning mode so as to be higher than the voltage E1 (normal spray voltage) used during the normal mode.

The above configuration makes it possible to cause the electrostatic atomizer 100 to operate in the cleaning mode. In other words, application of the voltage E2 causes the electrostatic atomizer 100 to carry out cleaning spraying and therefore makes it possible to remove foreign objects adhering to the reference electrode 2. As such, it is possible to prevent a decrease in the spraying performance of the electrostatic atomizer 100, and it is therefore possible to use the electrostatic atomizer 100 for a longer period of time.

### [Supplemental remarks]

As described above, the electrostatic atomizer of Patent Literature 1 does not include a feature for removing foreign objects. As described above, the inventors arrived at novel features (in particular, the selecting section 243 and the setting section 244) of the electrostatic atomizer 100 which enable cleaning spraying, as specific features for removing foreign objects.

### [Variation]

Embodiment 1 involved an example configuration in which the electrostatic atomizer 100 carried out cleaning spraying in a case where the current (current I) at the reference electrode 2 was less than or equal to the first threshold value THi. Note however, that the electrostatic atomizer 100 may carry out cleaning spraying in a case where the current at the spray electrode 1 is less than or equal to the first threshold value THi. This is because in a case where the current at the spray electrode 1 has decreases, the current at the reference electrode 2 presumably also tends to be similarly decreased.

As such, the selecting section 243 may be configured to select the cleaning mode in a case where the current at the spray electrode 1 or the current at the reference electrode 2 is less than or equal to the first threshold value THi.

In Embodiment 1, the counted number N was used as an example of the counted amount. Note, however, that the spray time may be used as the counted amount. For example, the selecting section 243 may select the cleaning mode in a case where the spray time is greater than or equal to a predetermined threshold value (for example, an amount obtained by converting the second threshold value THn of Embodiment 1 into time). The selecting section 243 need only be configured to select the mode of the electrostatic atomizer 100 in accordance with the counted amount.

### [Variation]

Assume a case where the power supply 21 that supplies power to the electrostatic atomizer 100 is a battery. In such a case, it is preferable to select the mode of the electrostatic atomizer 100 in a manner which takes into consideration the operation status of the battery (power supply 21). This is because, as described above, the electrostatic atomizer 100 tends to consume more power in the cleaning mode than in the normal spraying mode.

As such, the selecting section 243 may select the mode in accordance with the power supply operation information. As one example, the selecting section 243 may select the mode in accordance with battery voltage information (information indicating a battery voltage level) included in the power supply operation information. Hereinafter, for convenience, "VB" is used to indicate "battery voltage".

As one example, assume a case where an initial value (maximum value) of the battery voltage VB is 3.2 V. Power stored in the battery (power supply 21) gradually decreases along with passage of time. As such, the battery voltage VB also gradually decreases along with passage of time.

The selecting section 243 compares the battery voltage VB to a predetermined threshold value THv. Hereinafter, the threshold value THv may also be referred to as a third threshold value (or a battery voltage threshold value). The third threshold value THv may be set in advance in the electrostatic atomizer 100.

As one example, the third threshold value THv may be set to 2.5 V. The third threshold value THv is a threshold value for the battery voltage VB. The selecting section 243 may have an additional function of setting the third threshold value THv in accordance with the surrounding environment information.

In a case where the battery voltage VB is less than the third threshold value THv (in a case where VB < THv), the selecting section 243 selects the normal mode. In other words, the selecting section 243 does not select the cleaning mode in such a case.

This configuration makes it possible to prevent the electrostatic atomizer 100 from operating in the cleaning mode in a case where the remaining power stored in the battery is presumably small (in a case where the battery voltage VB is less than the third threshold value THv). In other words, the configuration makes it possible to prevent an increase in the power consumption of the electrostatic atomizer 100. As such, even in a case where the power stored in the battery has decreased, it is possible to maintain stable operation of the electrostatic atomizer 100.

Note that the selecting section 243 may select the cleaning mode in a case where the battery voltage VB is greater than or equal to the third threshold value THv (in a case where VB ≥ THv).

Note that the power supply operation information may include information (battery current information) indicating a current (battery current) supplied from the power supply 21 to the high voltage generating device 22. In such a case, the selecting section 243 may select the mode in accordance with the battery current information, instead of the battery voltage information. Alternatively, the selecting section 243 may select the mode in accordance with both the battery voltage information and the battery current information.

The power supply operation information may include information (battery resistance information) indicating the internal resistance of the power supply 21. In such a case, the selecting section 243 may select the mode in accordance with the battery resistance information, instead of the battery voltage information or the battery current information. Alternatively, the selecting section 243 may select the mode in accordance with the battery voltage information, the battery current information, and the battery resistance information.

### Embodiment 2

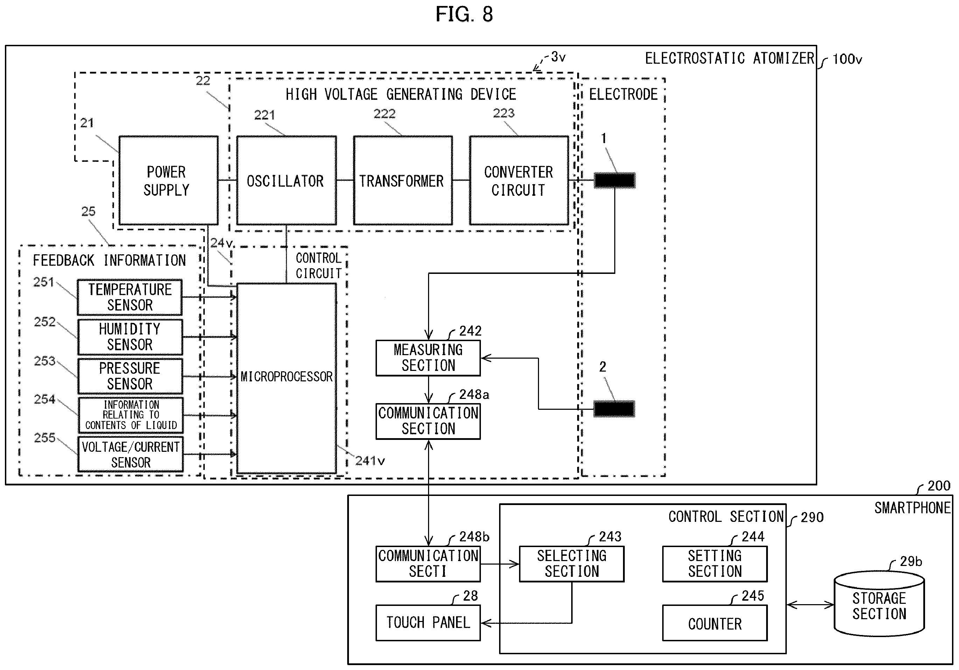

With reference to Figs. 8 to 10, the following description will discuss Embodiment 2. Note that an electrostatic atomizer of Embodiment 2 is referred to as an electrostatic atomizer 100v, for the purposes of differentiation from Embodiment 1. Embodiment 2 involves an example in which the electrostatic atomizer 100v is used in combination with a smartphone (information processing terminal) 200.

Fig. 8 is a functional block diagram illustrating a configuration of main parts of the electrostatic atomizer 100v and the smartphone 200 of Embodiment 2. As illustrated in Fig. 8, the configuration of the electrostatic atomizer 100v is obtained by (i) omitting the selecting section 243, the setting section 244, the counter 245, the light-emitting element 26, and the input section 27 from the electrostatic atomizer 100 of Embodiment 1 and (ii) adding a communication section 248a.

Note that a power supply device, a control circuit, and a microprocessor of the electrostatic atomizer 100v are referred to as a power supply device 3v, a control circuit 24v, and a microprocessor 241v, respectively, for the purposes of differentiation from Embodiment 1. For convenience of explanation, Embodiment 2 involves an example configuration in which the measuring section 242 of the power supply device 3v is provided outside the microprocessor 241v.

The smartphone 200 includes a touch panel (input section, display section, notifying section) 28, a control section 290, a storage section 29b, and a communication section 248b. As illustrated in Fig. 8, the control section 290 includes the selecting section 243, the setting section 244, and the counter 245 of Embodiment 1. Thus, in Embodiment 2, the various sections for selecting the mode of the electrostatic atomizer 100v and for setting the cleaning voltage are provided to smartphone 200.

Note that although a mobile phone (smartphone 200) is used as an example of the information processing terminal in Embodiment 2, the information processing terminal is not limited to being a mobile phone. For example, the information processing terminal may be (i) a remote control device for allowing a user to remotely control the electrostatic atomizer 100v or (ii) a portable information processing device such as a laptop-type personal computer (PC) or a tablet-type PC.

The control section 290 comprehensively controls various sections of the smartphone 200. Functions of the control section 290 may be realized via a CPU executing a program stored by the storage section 29b. The storage section 29b stores various programs executed by the control section 290 and data used by these programs.

The touch panel 28 is a member in which an input section and a display section are provided in an integral manner. As described later, in Embodiment 2, the touch panel 28 serves as the input section. Note, however, that the input section and the display section may be provided as separate members in Embodiment 2. For example, a publicly known hardware key may be may be provided to the smartphone 200 as the input section. The touch panel 28 (display section) can be controlled to serve as the notifying section.

The communication section 248a and the communication section 248b are each a communication interface for communication between the electrostatic atomizer 100v and the smartphone 200. Embodiment 2 involves an example in which the electrostatic atomizer 100v and the smartphone 200 communicate to each other wirelessly. Note, however, that the electrostatic atomizer 100v and smartphone 200 may carry out wired communication with each other.

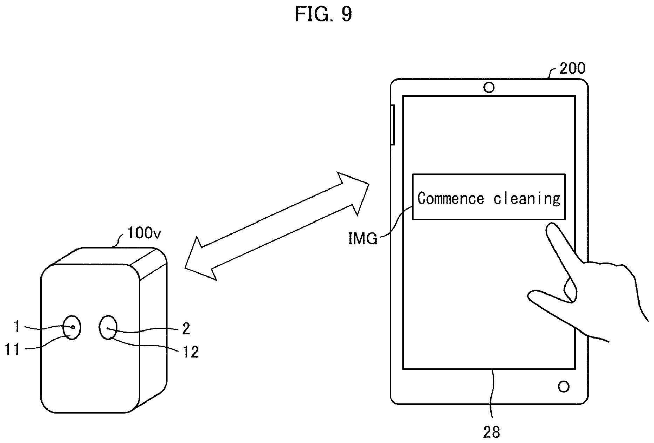

Fig. 9 is a diagram for describing one example of operations of the electrostatic atomizer 100v and the smartphone 200. In Embodiment 2, the selecting section 243 may prompt the user to select the mode of the electrostatic atomizer 100v by controlling the touch panel 28 to display a predetermined image (icons, objects).

As one example, the selecting section 243 may control the touch panel 28 to display an image IMG including the text "Commence cleaning," as illustrated in Fig. 9. The touch panel 28 receives, as the above-described user operation, a touch (input operation) carried out on the image IMG by the user. Receipt of the user operation by the touch panel 28 triggers the selecting section 243 to select the cleaning mode.

In a case where the smartphone 200 is connectable to a predetermined communication network (for example, a wireless LAN network), the various sections of the smartphone 200 may receive, via the communication network, instructions from other devices (for example, instructions to control the selecting section 243 to select a predetermined mode). For example, the selecting section 243 may receive from another device an instruction to select a predetermined mode.

### [Flow of process from commencement of operation to cleaning spraying in Embodiment 2]

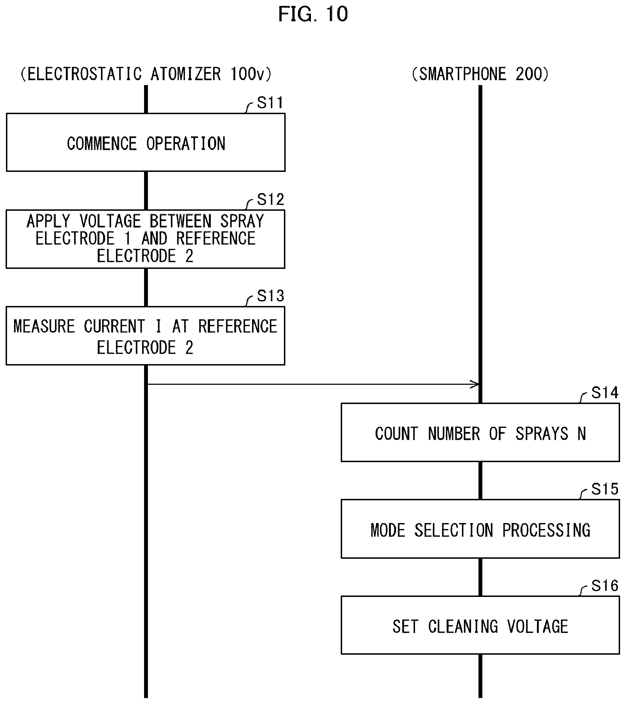

Fig. 10 is a sequence diagram illustrating an example flow of a process from S11 to S16, which is a process from commencement of operation to an anomaly notification in Embodiment 2. First, once the electrostatic atomizer 100v is powered on, the electrostatic atomizer 100v carries out steps S11 to S13 (similar to S1 to S3 as described above).

After S13, the electrostatic atomizer 100v provides, to the selecting section 243 of the smartphone 200 and via the communication sections 248a and 248b, a value of the current I as measured by the measuring section 242.

Then, in the smartphone 200, the counter 245 carries out S14 (similar to S5 as described above). Next, the smartphone 200 carries out S15 and S16 (similar to S7 and S8 as described above).

In this way, an information processing terminal which is communicably connectable to the electrostatic atomizer 100v and applied for use with the electrostatic atomizer 100v may carry out various processes for selecting the mode of the electrostatic atomizer 100v and setting the cleaning voltage.

### [Variation]

Embodiments 1 and 2 each involved an example configuration of an electrostatic atomizer which, for simplification of explanation, did not employ known feedback control (for example, current feedback control, voltage feedback control, current/voltage feedback control, or output power feedback control). Note however, that an electrostatic atomizer in accordance with an aspect of the present invention may employ known feedback control and further improve spraying stability.

### [Supplemental remarks]

Embodiments 1 and 2 involved configurations in which various functional sections for selecting the mode of the electrostatic atomizer and setting the cleaning voltage were provided either only in the electrostatic atomizer or only in the information processing terminal. Note, however, that in an aspect of the present invention, a portion of these various functional sections can be provided separately from each other among the electrostatic atomizer and the information processing terminal such that, as a whole, the sections make up an integrated control device (control system). A control device in accordance with an aspect of the present invention (in other words, a device which carries out a method of control in accordance with an aspect of the present invention) can be expressed as follows.

A control device in accordance with an aspect of the present invention is a control device to be used for an electrostatic atomizer, the electrostatic atomizer having a first electrode and a second electrode and being configured to spray a liquid from a tip of the first electrode by applying a voltage between the first electrode and the second electrode, the electrostatic atomizer having a cleaning mode for cleaning the second electrode and a normal mode for normal operation of the electrostatic atomizer, the control device including: a selecting section which selects the cleaning mode or the normal mode; and a setting section which sets a cleaning voltage so as to be higher than a normal spray voltage, the cleaning voltage being applied between the first electrode and the second electrode by the electrostatic atomizer in the cleaning mode, the normal spray voltage being applied between the first electrode and the second electrode by the electrostatic atomizer in the normal mode.

### [Supplemental remarks]

An information processing terminal in accordance with an aspect of the present invention can be expressed as follows.

An information processing terminal in accordance with an aspect of the present invention may be configured such that the setting section sets the cleaning voltage in accordance with surrounding environment information that indicates a surrounding environment of the electrostatic atomizer.

An information processing terminal in accordance with an aspect of the present invention may be configured such that the surrounding environment information includes information relating to at least one of an air temperature of an area surrounding the electrostatic atomizer, a humidity of the area surrounding the electrostatic atomizer, and an atmospheric pressure of the area surrounding the electrostatic atomizer.

An information processing terminal in accordance with an aspect of the present invention may be configured such that the selecting section selects the cleaning mode in a case where a value of a current at the first electrode or a value of a current at the second electrode is less than or equal to a first threshold value.

An information processing terminal in accordance with an aspect of the present invention may be configured to further include: a counter which counts a number of sprays or a spray time, the number of sprays being the number of times the electrostatic atomizer has sprayed the liquid, the spray time being the length of time the electrostatic atomizer has sprayed the liquid, wherein the selecting section selects the cleaning mode in a case where a counted amount, which indicates a counting result from the counter, is greater than or equal to a second threshold value.

An information processing terminal in accordance with an aspect of the present invention may be configured such that: a power supply which supplies power to the electrostatic atomizer is a battery; and the selecting section selects the normal mode in a case where a voltage supplied from the battery to the electrostatic atomizer is less than a third threshold value.

An information processing terminal in accordance with an aspect of the present invention may be configured such that: each of the cleaning voltage and the normal spray voltage has a pulse-type waveform; and the setting section sets a pulse width of the cleaning voltage to be greater than a pulse width of the normal spray voltage.

An information processing terminal in accordance with an aspect of the present invention may be configured such that: each of the cleaning voltage and the normal spray voltage has a pulse-type waveform; and the setting section sets a pulse width of the cleaning voltage to be less than a pulse width of the normal spray voltage.

An information processing terminal in accordance with an aspect of the present invention may be configured such that the setting section controls the electrostatic atomizer such that application of the cleaning voltage and application of the normal spray voltage are discontinuous from each other.

An information processing terminal in accordance with an aspect of the present invention may be configured such that the setting section controls the electrostatic atomizer such that application of the cleaning voltage and application of the normal spray voltage are continuous with each other.

An information processing terminal in accordance with an aspect of the present invention may be configured to further include: a notifying section configured to provide external notification indicating that the electrostatic atomizer is in the cleaning mode.

An information processing terminal in accordance with an aspect of the present invention may be configured to further include: an input section configured to receive a user operation, wherein the selecting section selects the cleaning mode in accordance with the user operation.

### [Software Implementation Example]

Control blocks of the electrostatic atomizer 100, the electrostatic atomizer 100v, and the smartphone 200 (particularly the microprocessor 241, the microprocessor 241v, and the control section 290) can be realized by a logic circuit (hardware) provided in an integrated circuit (IC chip) or the like or can be alternatively realized by software as executed by a central processing unit (CPU).

In the latter case, the electrostatic atomizer 100, the electrostatic atomizer 100v, and the smartphone 200 each include a CPU that executes instructions of a program that is software realizing the foregoing functions; a read only memory (ROM) or a storage device (each referred to as "storage medium") in which the program and various kinds of data are stored so as to be readable by a computer (or a CPU); and a random access memory (RAM) in which the program is loaded. An object of the present invention can be achieved by a computer (or a CPU) reading and executing the program stored in the storage medium. Examples of the storage medium encompass "a non-transitory tangible medium" such as a tape, a disk, a card, a semiconductor memory, and a programmable logic circuit. The program can be made available to the computer via any transmission medium (such as a communication network or a broadcast wave) which allows the program to be transmitted. Note that the present invention can also be achieved in the form of a computer data signal in which the program is embodied via electronic transmission and which is embedded in a carrier wave.

Aspects of the present invention can also be expressed as follows.

An electrostatic atomizer in accordance with Aspect 1 of the present invention is an electrostatic atomizer which sprays a liquid from a tip of a first electrode of the electrostatic atomizer by applying a voltage between the first electrode and a second electrode of the electrostatic atomizer, including: a selecting section which selects a cleaning mode or a normal mode, the cleaning mode being for cleaning the second electrode, the normal mode being for normal operation of the electrostatic atomizer; and a setting section which sets a cleaning voltage so as to be higher than a normal spray voltage, the cleaning voltage being applied between the first electrode and the second electrode in the cleaning mode, the normal spray voltage being applied between the first electrode and the second electrode in the normal mode.

As described above, spraying performance of the electrostatic atomizer can decrease in a case where a foreign object is adhered to the second electrode. The above configuration makes it possible to cause the electrostatic atomizer to operate in the cleaning mode. In other words, application of the cleaning voltage causes the electrostatic atomizer to carry out the cleaning spraying and therefore makes it possible to remove foreign objects adhering to the second electrode. As such, it is possible to prevent a decrease in the spraying performance of the electrostatic atomizer. In this way, an electrostatic atomizer in accordance with an aspect of the present invention enables longer use of the electrostatic atomizer by employing a feature for removing foreign objects.

In Aspect 2 of the present invention, the electrostatic atomizer of Aspect 1 may be configured such that the setting section sets the cleaning voltage in accordance with surrounding environment information that indicates a surrounding environment of the electrostatic atomizer.

The above configuration makes it possible to set the cleaning voltage in accordance with the surrounding environment of the electrostatic atomizer.

In Aspect 3 of the present invention, the electrostatic atomizer of Aspect 2 may be configured such that the surrounding environment information includes information relating to at least one of an air temperature of an area surrounding the electrostatic atomizer, a humidity of the area surrounding the electrostatic atomizer, and an atmospheric pressure of the area surrounding the electrostatic atomizer.

The above configuration makes it possible to set the cleaning voltage in accordance with at least one of the air temperature, the humidity, and the atmospheric pressure of the area surrounding the electrostatic atomizer.

In Aspect 4 of the present invention, the electrostatic atomizer of any one of Aspects 1 to 3 may be configured to further include: a measuring section which measures a value of a current at the first electrode or a value of a current at the second electrode, wherein the selecting section selects the cleaning mode in a case where the value of the current at the first threshold value or the value of the current at the second electrode is less than or equal to a first threshold value.

As described above, in a case where the value of the current at the second electrode has decreased, there is a high likelihood that a foreign object is adhered to the second electrode. In a case where the value of the current at the first electrode has decreased, it is similarly highly likely that a foreign object is adhered to the second electrode. The above configuration makes it possible to cause the electrostatic atomizer to operate in the cleaning mode in a case where it there is a high likelihood that a foreign object is adhered to the second electrode.

In Aspect 5 of the present invention, the electrostatic atomizer of any one of Aspects 1 to 4 may be configured to further include: a counter which counts a number of sprays or a spray time, the number of sprays being the number of times the electrostatic atomizer has sprayed the liquid, the spray time being the length of time the electrostatic atomizer has sprayed the liquid, wherein the selecting section selects the cleaning mode in a case where a counted amount, which indicates a counting result from the counter, is greater than or equal to a second threshold value.

The above configuration as well makes it possible to cause the electrostatic atomizer to operate in the cleaning mode in a case where it there is a high likelihood that a foreign object is adhered to the second electrode.

In Aspect 6 of the present invention, the electrostatic atomizer of any one of Aspects 1 to 5 may be configured such that: a power supply which supplies power to the electrostatic atomizer is a battery; and the selecting section selects the normal mode in a case where a voltage supplied from the battery to the electrostatic atomizer is less than a third threshold value.

As described above, the electrostatic atomizer tends to consume more power in the cleaning mode than in the normal spraying mode. As such, in a case where the power supply is a battery, it is preferable for the electrostatic atomizer to operate in a manner that takes into consideration the operation status of the power supply.

The above configuration makes it possible to prevent the electrostatic atomizer from operating in the cleaning mode in a case where there is only a small amount of remaining power stored in the battery. As such, even in a case where the power stored in the battery has decreased, it is possible to maintain stable operation of the electrostatic atomizer.

In Aspect 7 of the present invention, the electrostatic atomizer of any one of Aspects 1 to 6 may be configured such that: each of the cleaning voltage and the normal spray voltage has a pulse-type waveform; and the setting section sets a pulse width of the cleaning voltage to be greater than a pulse width of the normal spray voltage.

The above configuration makes it possible to set a single cleaning spraying time period so as to be comparatively longer. The configuration therefore makes it possible to suitably remove foreign objects from the second reference.

In Aspect 8 of the present invention, the electrostatic atomizer of any one of Aspects 1 to 6 may be configured such that: each of the cleaning voltage and the normal spray voltage has a pulse-type waveform; and the setting section sets a pulse width of the cleaning voltage to be less than a pulse width of the normal spray voltage.

The above configuration makes it possible to comparatively decrease the amount of liquid sprayed in one cleaning spraying. Furthermore, by shortening the cleaning spraying time period, it is possible to reduce power consumed by the electrostatic atomizer.

In Aspect 9 of the present invention, the electrostatic atomizer of any one of Aspects 1 to 8 may be configured such that the setting section controls the electrostatic atomizer such that application of the cleaning voltage and application of the normal spray voltage are discontinuous from each other.

The above configuration makes it possible to reduce power consumed by the electrostatic atomizer.

In Aspect 10 of the present invention, the electrostatic atomizer of any one of Aspects 1 to 8 may be configured such that the setting section controls the electrostatic atomizer such that application of the cleaning voltage and application of the normal spray voltage are continuous with each other.

The above configuration makes it possible to reduce the likelihood of a foreign object adhering to the reference electrode.

In Aspect 11 of the present invention, the electrostatic atomizer of any one of Aspects 1 to 10 may be configured to further include: a notifying section configured to provide external notification indicating that the electrostatic atomizer is in the cleaning mode.

The above configuration makes it possible to provide external notification indicating that the electrostatic atomizer is operating in the cleaning mode.

In Aspect 12 of the present invention, the electrostatic atomizer of any one of Aspects 1 to 11 may be configured to further include: an input section configured to receive a user operation, wherein the selecting section selects the cleaning mode in accordance with the user operation.

The above configuration allows the user to discretionarily control the electrostatic atomizer to operate in the cleaning mode.

An information processing terminal in accordance with Aspect 13 of the present invention is an information processing terminal which is communicably connectable to an electrostatic atomizer, the electrostatic atomizer having a first electrode and a second electrode and being configured to spray a liquid from a tip of the first electrode by applying a voltage between the first electrode and the second electrode, the electrostatic atomizer having a cleaning mode for cleaning the second electrode and a normal mode for normal operation of the electrostatic atomizer, the information processing terminal including: a selecting section which selects the cleaning mode or the normal mode; and a setting section which sets a cleaning voltage so as to be higher than a normal spray voltage, the cleaning voltage being applied between the first electrode and the second electrode by the electrostatic atomizer in the cleaning mode, the normal spray voltage being applied between the first electrode and the second electrode by the electrostatic atomizer in the normal mode.

The above configuration brings about effects similar to those of an electrostatic atomizer in accordance with an aspect of the present invention.

A method of control in accordance with Aspect 14 of the present invention is a method of controlling an electrostatic atomizer, the electrostatic atomizer having a first electrode and a second electrode and being configured to spray a liquid from a tip of the first electrode by applying a voltage between the first electrode and the second electrode, the electrostatic atomizer having a cleaning mode for cleaning the second electrode and a normal mode for normal operation of the electrostatic atomizer, the method including the steps of: selecting the cleaning mode or the normal mode; and setting a cleaning voltage so as to be higher than a normal spray voltage, the cleaning voltage being applied between the first electrode and the second electrode by the electrostatic atomizer in the cleaning mode, the normal spray voltage being applied between the first electrode and the second electrode by the electrostatic atomizer in the normal mode.

The above method brings about effects similar to those of an electrostatic atomizer in accordance with an aspect of the present invention.

An information processing terminal device in accordance with each aspect of the present invention can be realized by a computer. The computer is operated based on (i) a control program for causing the computer to realize the information processing terminal by causing the computer to operate as each section (software element) included in the information processing terminal and (ii) a computer-readable storage medium in which the control program is stored. Such a control program and computer-readable storage medium are included in the scope of the present invention.

### [Additional remarks]

The present invention is not limited to the embodiments, but can be altered by a skilled person in the art within the scope of the claims. The present invention also encompasses, in its technical scope, any embodiment derived by combining technical means disclosed in differing embodiments.

### Reference Signs List

1 Spray electrode (first electrode)
2 Reference electrode (second electrode)
21 Power supply (battery)
25 Feedback information (surrounding environment information)
26 Light-emitting element (notifying section)
27 Input section
28 Touch panel (input section, notifying section)
100, 100v Electrostatic atomizer
200 Smartphone (information processing terminal)
243 Selecting section
244 Setting section
245 Counter
E Voltage
E1 Voltage (normal spray voltage)
E2 Voltage (cleaning voltage)
I Current
N Counted number
VB Battery voltage
THi First threshold value
THn Second threshold value
THv Third threshold value

## Claims

1. An electrostatic atomizer which sprays a liquid from a tip of a first electrode of the electrostatic atomizer by applying a voltage between the first electrode and a second electrode of the electrostatic atomizer, comprising:
a selecting section which selects a cleaning mode or a normal mode, the cleaning mode being for cleaning the second electrode, the normal mode being for normal operation of the electrostatic atomizer; and
a setting section which sets a cleaning voltage so as to be higher than a normal spray voltage, the cleaning voltage being applied between the first electrode and the second electrode in the cleaning mode, the normal spray voltage being applied between the first electrode and the second electrode in the normal mode.

2. The electrostatic atomizer according to claim 1, wherein the setting section sets the cleaning voltage in accordance with surrounding environment information that indicates a surrounding environment of the electrostatic atomizer.

3. The electrostatic atomizer according to claim 2, wherein the surrounding environment information includes information relating to at least one of an air temperature of an area surrounding the electrostatic atomizer, a humidity of the area surrounding the electrostatic atomizer, and an atmospheric pressure of the area surrounding the electrostatic atomizer.

4. The electrostatic atomizer according to any one of claims 1 to 3, wherein the selecting section selects the cleaning mode in a case where a value of a current at the first electrode or a value of a current at the second electrode is less than or equal to a first threshold value.

5. The electrostatic atomizer according to any one of claims 1 to 4, further comprising:
a counter which counts a number of sprays or a spray time, the number of sprays being the number of times the electrostatic atomizer has sprayed the liquid, the spray time being the length of time the electrostatic atomizer has sprayed the liquid,
wherein the selecting section selects the cleaning mode in a case where a counted amount, which indicates a counting result from the counter, is greater than or equal to a second threshold value.

6. The electrostatic atomizer according to any one of claims 1 to 5, wherein:
a power supply which supplies power to the electrostatic atomizer is a battery; and
the selecting section selects the normal mode in a case where a voltage supplied from the battery to the electrostatic atomizer is less than a third threshold value.

7. The electrostatic atomizer according to any one of claims 1 to 6, wherein:
each of the cleaning voltage and the normal spray voltage has a pulse-type waveform; and
the setting section sets a pulse width of the cleaning voltage to be greater than a pulse width of the normal spray voltage.

8. The electrostatic atomizer according to any one of claims 1 to 6, wherein: each of the cleaning voltage and the normal spray voltage has a pulse-type waveform; and
the setting section sets a pulse width of the cleaning voltage to be less than a pulse width of the normal spray voltage.

9. The electrostatic atomizer according to any one of claims 1 to 8, wherein the setting section controls the electrostatic atomizer such that application of the cleaning voltage and application of the normal spray voltage are discontinuous from each other.

10. The electrostatic atomizer according to any one of claims 1 to 8, wherein the setting section controls the electrostatic atomizer such that application of the cleaning voltage and application of the normal spray voltage are continuous with each other.

11. The electrostatic atomizer according to any one of claims 1 to 10, further comprising: a notifying section configured to provide external notification indicating that the electrostatic atomizer is in the cleaning mode.

12. The electrostatic atomizer according to any one of claims 1 to 11, further comprising:
an input section configured to receive a user operation,
wherein the selecting section selects the cleaning mode in accordance with the user operation.

13. An information processing terminal which is communicably connectable to an electrostatic atomizer, the electrostatic atomizer having a first electrode and a second electrode and being configured to spray a liquid from a tip of the first electrode by applying a voltage between the first electrode and the second electrode,
the electrostatic atomizer having a cleaning mode for cleaning the second electrode and a normal mode for normal operation of the electrostatic atomizer,
the information processing terminal comprising:
a selecting section which selects the cleaning mode or the normal mode; and
a setting section which sets a cleaning voltage so as to be higher than a normal spray voltage, the cleaning voltage being applied between the first electrode and the second electrode by the electrostatic atomizer in the cleaning mode, the normal spray voltage being applied between the first electrode and the second electrode by the electrostatic atomizer in the normal mode.

14. A method of controlling an electrostatic atomizer, the electrostatic atomizer having a first electrode and a second electrode and being configured to spray a liquid from a tip of the first electrode by applying a voltage between the first electrode and the second electrode,
the electrostatic atomizer having a cleaning mode for cleaning the second electrode and a normal mode for normal operation of the electrostatic atomizer,
the method comprising the steps of:
selecting the cleaning mode or the normal mode; and
setting a cleaning voltage so as to be higher than a normal spray voltage, the cleaning voltage being applied between the first electrode and the second electrode by the electrostatic atomizer in the cleaning mode, the normal spray voltage being applied between the first electrode and the second electrode by the electrostatic atomizer in the normal mode.

15. A control program for causing a computer to function as the information processing terminal recited in claim 13, the control program causing the computer to function as the selecting section and the setting section.
